# NOUVEAU FASCICULE DE BREVET EUROPEEN

(11) **EP 2 199 173 B2**
(45) Date de publication et mention de la décision concernant l'opposition: **27.07.2022**
(45) Mention de la délivrance du brevet: 26.02.2014
(21) Numéro de dépôt: 09173405.3
(22) Date de dépôt: 19.10.2009
(51) Int. Cl.: B61C 3/00, B61D 1/06

(54) **Automotrice de transport de voyageurs**
Triebwagen zur Personenbeförderung
Railcar for passenger transport

(30) Priorité: 30.10.2008 FR 0857415
(43) Date de publication de la demande: 23.06.2010
(73) Titulaire: ALSTOM Transport Technologies, 93400 Saint-Ouen (FR)
(72) Inventeur: Palais, Georges, 75009, PARIS (FR)
(74) Mandataire: Lavoix

(56) Documents cités:
- EP-A- 0 616 936
- EP-A- 1 955 917
- DE-A1- 4 419 851

## Description

La présente invention concerne une automotrice de transport de voyageurs au moins partiellement à deux niveaux et à motorisation concentrée, et plus particulièrement une automotrice grande vitesse ou urbain.

### Art antérieur

Les architectures de train ou d'automotrices sont différenciées selon que la traction est à motorisation concentrée ou répartie, selon que les voitures les composants sont liées de manière articulée ou non articulée, selon la disposition et le nombre de bogies moteurs et porteurs, et selon qu'elles sont à un ou deux niveaux.

Les performances de ces véhicules sont liées à leurs architectures. Les constructeurs doivent donc concevoir un véhicule propre à chaque gamme de vitesse / capacité de voyageurs.

Par souci de clarté, ces différentes notions sont définies dans les paragraphes suivants.

### Train ou automotrice

Une automotrice comporte au moins une voiture motorisée, c'est-à-dire au moins une voiture comprenant au moins un compartiment voyageur et au moins une chaîne de traction. Une automotrice peut donc ne comporter que des voitures motorisées ou comporter des voitures non motorisées et au moins une voiture motorisée.

Il est connu des documents EP 1955917 A1 et DE 4419851 A1 une automotrice de transport de voyageurs dans laquelle les chaines de traction sont plus particulièrement disposées dans les voitures d'extrémité et éventuellement dans une ou plusieurs voitures intermédiaires.

Un train est composé d'une ou de plusieurs motrices et d'un certain nombre de voitures de passagers. Une motrice n'est pas accessible aux passagers et comprend entre autres une chaîne de traction.

### Motorisation concentrée ou répartie

La chaîne de traction comprend plusieurs équipements, qui sont soit des composants électriques soit des composants électroniques de puissance et de commande, adaptés pour capter l'énergie électrique à partir d'une source de traction (par exemple une ligne caténaire), la transformer et la convertir en signaux électriques d'alimentation de moteurs électriques des bogies moteurs pour assurer l'entraînement du train ou de l'automotrice.

La motorisation est dite concentrée lorsque tous les composants des chaînes de traction sont regroupés à un emplacement unique, par exemple dans la motrice d'un train. La motorisation est dite répartie lorsque les composants de la chaîne de traction sont répartis sur plusieurs voitures, sous le châssis des voitures ou en toiture.

### Voitures articulées ou non articulées

Un bogie comprend de façon classique un châssis de bogie reposant sur deux essieux. Par essieu, on entend de façon générale une paire de roues coaxiales d'appui sur les rails d'une voie ferrée.

Un bogie moteur comprend au moins un moteur électrique d'entraînement des roues d'au moins un de ses essieux, dénommé essieu moteur. Par opposition, un bogie non motorisé est appelé bogie porteur.

Deux voitures adjacentes sont dites « articulées » (ou en liaison articulée) lorsque une première voiture est en appui par une de ces extrémités sur un bogie et que l'extrémité en vis-à-vis de la deuxième voiture repose sur l'extrémité de la première. Le bogie est donc à cheval sous les extrémités des deux voitures adjacentes. Une automotrice composée de deux voitures articulées compte donc trois bogies, puisque les extrémités libres des deux voitures reposent chacune sur un bogie et les extrémités adjacentes de ces deux voitures reposent sur un même bogie. Par opposition, deux voitures adjacentes non articulées ne sont pas, à chacune de leurs extrémités, en appui sur un bogie commun, chaque voiture reposant sur deux bogies. Une automotrice composée de deux voitures non articulées compte donc quatre bogies.

Tous les véhicules ferroviaires doivent respecter la contrainte de la charge à l'essieu, dont la valeur est imposée par l'infrastructure ou par les normes applicables sur les voies où circulent ces véhicules.

### Voiture à un ou deux niveaux

Une voiture est dite à un niveau lorsqu'elle a un compartiment de voyageurs sur un seul niveau de plancher, et elle est dite à deux niveaux lorsqu'elle comporte deux compartiments de voyageurs sur deux niveaux, superposés l'un au-dessus de l'autre.

Il existe aussi des automotrices à grande vitesse un niveau, non articulées et à motorisation répartie, avec différentes distributions des équipements de traction dans les voitures, différents emplacements des bogies moteurs ou des essieux moteurs selon les architectures. Ces automotrices comportent plusieurs voitures motorisées, reposant chacune sur deux bogies.

Ce type de motorisation nécessite une grande masse de câbles de puissance nécessaires pour relier le ou les dispositifs de captage d'énergie jusqu'aux moteurs en passant par chaque équipement de traction, câbles qui courent donc entre toutes les voitures équipées soit d'un dispositif de captage, soit d'un équipement de la chaîne de traction, soit d'un bogie moteur.

Il existe également des trains un niveau ou deux niveaux, à liaison « mixte » et à motorisation concentrée. Les voitures de passagers reposent sur des bogies porteurs et sont encadrées par deux motrices, à chaque extrémité du train, reposant sur des bogies moteurs. Les liaisons de ce train sont dites « mixtes » car différents types de liaisons relient les voitures et les motrices. Les voitures sont reliées entre elles par une liaison articulée, et les voitures sont reliées aux motrices par une liaison non articulée.

Cette architecture présente une capacité en nombre de passagers réduite par rapport à une automotrice de longueur identique, puisque les motrices ne sont pas accessibles aux passagers.

C'est donc un but de l'invention de proposer une automotrice qui ne présente pas les inconvénients des architectures de l'état de la technique.

A cet effet, l'invention propose une automotrice de transport de voyageurs au moins partiellement à deux niveaux et à motorisation concentrée telle que revendiquée dans la revendication 1.

L'automotrice comprend une ou plusieurs des caractéristiques suivantes, prises selon toutes les combinaisons techniquement possibles :
- l'ensemble des voitures sont à deux niveaux ou les voitures, autres que les voitures deux niveaux, sont à un niveau.

### Description de l'invention

L'automotrice, de transport de voyageurs, selon l'invention est au moins partiellement à deux niveaux et à motorisation concentrée. Elle comporte successivement une première voiture pilote 2, puis au moins une voiture intermédiaire 3, au moins une voiture deux niveaux 4 au moins partiellement motorisée constituant un ensemble E, puis au moins une voiture intermédiaire 3 et une seconde voiture pilote 2. La motorisation est concentrée sur les deux voitures 4.

Les extrémités adjacentes des voitures deux niveaux 4 dudit ensemble E, des voitures pilotes 2 et des voitures intermédiaires 3 sont toutes non-articulées. Ainsi, l'automotrice selon l'invention ne comporte aucune liaison articulée entre les voitures.

Les voitures deux niveaux 4 de l'ensemble E et les voitures intermédiaires 3a qui leurs sont immédiatement adjacentes comportent au moins un essieu motorisé.

Les voitures pilotes 2, les voitures intermédiaires 3 et les extrémités des voitures intermédiaires 3a opposées aux extrémités des voitures deux niveaux 4 de l'ensemble E de l'automotrice sont toutes non-articulées entre elles. Un bogie est donc disposé sous chaque extrémité de chaque voiture.

L'automotrice comporte deux à quatre chaînes de traction, au moins une chaîne de traction étant disposée dans chaque voiture deux niveaux 4 de l'ensemble E. Pour cette raison, les voitures deux niveaux 4 de l'ensemble E seront dénommées voitures motorisées. L'automotrice est donc à motorisation concentrée, la concentration s'effectuant dans une à deux voitures, qu'il y ait deux ou quatre chaînes de traction. Les voitures intermédiaires 3a immédiatement adjacentes aux voitures deux niveaux 4 de l'ensemble E comportent un bogie au moins partiellement motorisé disposé à l'extrémité libres des ces voitures intermédiaires 3a.

Chaque voiture deux niveaux 4 comportant une chaîne de traction est supportée à ses deux extrémités soit par un bogie moteur et un bogie porteur, soit par deux bogies moteurs.

L'automotrice comprend, de part et d'autre des voitures deux niveaux 4 de l'ensemble E et des voitures intermédiaires 3a immédiatement adjacentes aux voitures deux niveaux 4 de l'ensemble E, au moins une voiture intermédiaire, un ou deux niveaux, dépourvue de chaîne de traction et une voiture pilote, un ou deux niveaux, également dépourvue de chaîne de traction. Comme ces voitures intermédiaires ne comportent pas de chaîne de traction, elles sont appelées remorques.

Les remorques sont donc supportées à leurs extrémités par des bogies porteurs.

Une automotrice conforme à l'invention respecte donc une règle d'alternance d'ensembles de voitures non motorisées et d'ensembles de voitures motorisées, et une règle d'alternance de bogies moteurs et de bogies porteurs afin de respecter la charge maximale à l'essieu.

La charge à l'essieu de l'automotrice conforme à l'invention est maintenue en dessous de la charge maximale admissible car :
- Chaque voiture de l'automotrice repose sur deux bogies dédiés, ce qui permet de répartir de façon optimale la charge appliquée sur les essieux, le nombre d'essieux étant important (quatre essieux par voiture),
- Les remorques également dépourvues de chaînes de traction possèdent un poids à vide plus faible que les voitures motorisées.
- Les voitures deux niveaux motorisées reçoivent des passagers et les équipements d'au moins une chaîne de traction. Or, les bogies dédiés moteurs à chaque extrémité de la voiture deux niveaux motorisée supportent chacun la moitié de la masse de la voiture motorisée.

L'équilibrage des masses sur chaque bogie porteur et bogie moteur est également obtenu par l'optimisation de la répartition des différents équipements de traction ou auxiliaires de l'automotrice, et de l'aménagement intérieur des voitures qui diffère selon le confort souhaité (type et nombre de sièges différents selon la classe de la voiture).

L'aménagement intérieur des voitures deux niveaux 4 motorisées notamment dépend de la masse de la ou des chaînes de traction, qui dépendent elles-mêmes des performances souhaitées de l'automotrice (traction multi-tension, vitesse maximale, etc.).

Dans le cadre de la présente invention également, si la masse des équipements traction installés est élevée, l'aménagement intérieur de la voiture deux niveaux motorisée non articulée n'aura pas besoin d'être allégé et conçu comme une voiture-bar, une voiture offrant des services ou ayant une capacité voyageur réduite par rapport à la capacité des remorques.

Chaque chaîne de traction entraîne au moins un essieu moteur du ou des bogies moteurs disposés sous l'une ou sous les deux extrémités des voitures deux niveaux 4 dans lesquelles sont disposées une ou plusieurs chaînes de traction. L'automotrice peut donc comporter trois à douze essieux moteurs, selon que chaque voiture intermédiaire partiellement motorisée sont supportées par un bogie moteur, qui comportent lui-même un ou deux essieux moteurs et que chaque voiture deux niveaux motorisée sont supportées par un ou deux bogies moteurs, qui comportent eux-même un ou deux essieux moteurs.

Un avantage de l'automotrice entièrement non-articulée selon l'invention est d'obtenir une répartition des charges sur un plus grand nombre d'essieux par rapport à une rame entièrement ou partiellement articulée. En outre, les opérations de maintenance sont réduites du fait de la concentration des chaînes de traction sur deux voitures. Le véhicule bénéficie encore de l'avantage consistant en une grande capacité puisque toute la longueur du véhicule est utilisée pour recevoir des passagers.

Un avantage de l'architecture non articulée est la décomposition des fonctions pilotage et absorption d'énergie, disposées dans les voitures pilote, et de la fonction traction, disposée, selon l'invention, dans les voitures deux niveaux. Une conséquence est de permettre une meilleure gestion et répartition des masses.

Un avantage de la concentration des chaînes de traction dans les voitures deux niveaux motorisées est de mieux protéger et maîtriser les incendies en séparant physiquement les chaînes de traction les unes des autres, et en séparant physiquement les chaînes de traction des compartiments passagers.

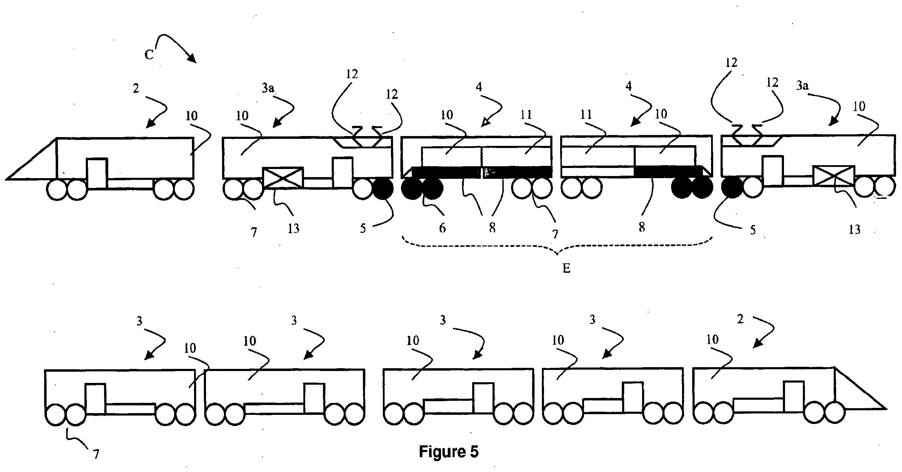

L'invention et d'autres avantages seront mieux compris à la lecture de la description qui va suivre, donnée uniquement à titre d'exemple, et faite en se référant aux dessins annexés, dans lesquels
- les figures 1 à 5 sont des vues schématiques de côté d'automotrices selon plusieurs modes de réalisation,
- les figures 6 et 7 représentent schématiquement différente version concernant la position des essieux moteurs ou porteurs et la position des chaînes de traction.

Par convention, les roues des essieux moteurs sont noircies sur les figures.

### Premier mode de réalisation

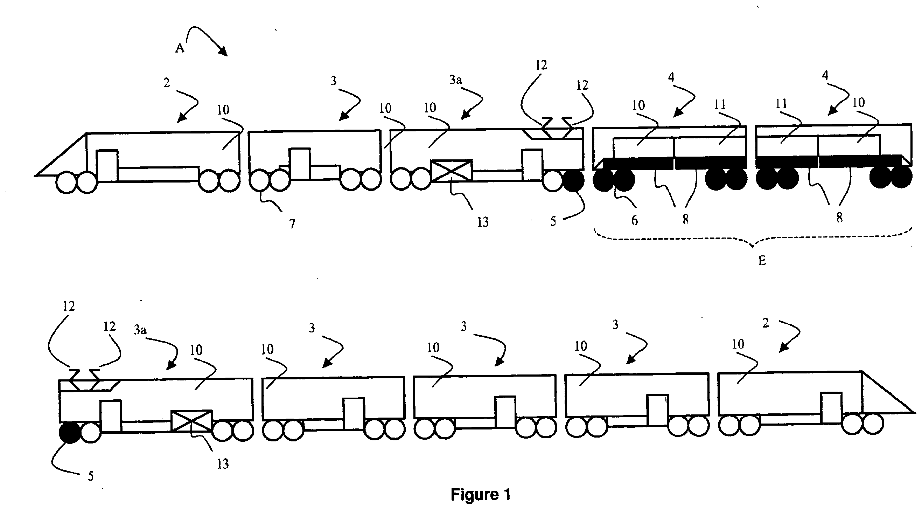

Telle que représentée sur la figure 1, une automotrice A comprend quatre remorques 3, deux voitures intermédiaires 3a et deux voitures deux niveaux motorisées 4 disposées entre deux voitures pilotes 2.

Une première voiture pilote 2 est située à une première extrémité de l'automotrice A (en partant de la gauche sur la figure 1). Elle présente une extrémité libre, où est située une cabine de conduite 9, et repose sur un bogie porteur 7 composés de deux essieux porteurs.. A son extrémité opposée, la voiture pilote 2 est adjacente à une première remorque 3. Les deux extrémités en vis-à-vis des voitures 2 et 3 reposent chacune sur un bogie porteur 7 dédié, composé de deux essieux porteurs.

La première remorque 3 est adjacente à son autre extrémité à une première voiture intermédiaire 3a. Les deux extrémités en vis-à-vis des voitures 3 et 3a reposent chacune sur un bogie porteur 7 dédié, composé de deux essieux porteurs.

Ni la première voiture pilote 2, ni la première remorque 3 ne reçoivent de chaîne de traction 8.

La première voiture intermédiaire 3a est en liaison non articulée à une première voiture deux niveaux motorisée 4, située dans l'automotrice de ce mode de réalisation en quatrième position en partant de la gauche. La voiture intermédiaire 3a comporte à cette extrémité non articulée un bogie dont au moins un essieu est motorisé.

La première voiture deux niveaux motorisée 4 est adjacente, en liaison non articulée, à une seconde voiture deux niveaux motorisée 4. Ces deux voitures deux niveaux motorisées 4 ont donc chacune un bogie dédié motorisé à chacune de leurs extrémités. Deux chaînes de traction 8 sont disposées sous le compartiment voyageur 10 et/ou zone de service 11 et alimentent les moteurs des bogies moteurs -composés chacun de deux essieux moteurs- situés à chaque extrémité des voitures deux niveaux motorisées 4.

Une seconde voiture intermédiaire 3a est en liaison non articulée à la seconde voiture deux niveaux motorisée 4 et est en liaison non articulée avec une deuxième remorque 3.

La deuxième remorque 3 et les deux remorques 3 suivantes sont également non articulées et reposent sur des bogies porteurs 7. La deuxième voiture pilote 2 est identique à la première.

Toutes les voitures 2, 3 et 3a de l'automotrice A sont soit des voitures un niveau, soit des voitures deux niveaux.

Les voitures intermédiaires 3a sont susceptibles de recevoir des équipements électriques auxiliaires 13.

Toutes les voitures 2, 3, 4 de l'automotrice A possèdent un compartiment voyageurs 10. Chacune des voitures 2, 3, 4 communique avec la ou chaque voiture adjacente par une intercirculation (non représentée). Comme le véhicule est non articulé, l'automotrice A de la figure 1 (ou 2) possède vingt bogies, quatre bogies motorisés 6, quatorze bogies porteurs 7 et deux bogies partiellement motorisés, pour une longueur d'environ 200 m. Dans ce mode de réalisation, tous les essieux des bogies moteurs des voitures deux niveaux 4 sont motorisés. Une telle automotrice peut transporter de l'ordre de 550 passagers, en fonction de l'aménagement intérieur, à une vitesse commerciale d'au moins 350 km/h.

Dans chacune des voitures deux niveaux motorisée 4, la ou les chaînes de traction 8 sont disposées sous le plancher du compartiment voyageurs 10 ou de la zone bar 11 afin de préserver la longueur du compartiment. La fig. 1 représente schématiquement l'emplacement des chaînes de traction 8 sous toute la longueur des compartiments voyageurs 10 et des zones bars des voitures deux niveaux 4 mais selon l'encombrement effectif des différents composants de la chaîne de traction 8, celle-ci peut s'étendre en totalité ou en partie seulement sous le plancher des compartiments voyageurs 10 ou des zones bars.

Chacune des voitures intermédiaires 3a est munie d'un pantographe 12 pour capter l'énergie électrique sur une ligne caténaire (non représentée).

Un câble de haute tension (non représentée) distribue l'énergie électrique captée par chaque pantographe 12 à la chaîne de traction 8 située dans la voiture deux niveaux motorisée 4. En pratique, ces câbles s'étendent par exemple en toiture.

La concentration des chaînes de traction 8 et des bogies moteurs 6 sur un nombre très limité de voitures permet de limiter la masse des câbles nécessaires, puisque seuls des câbles de haute tension s'étendent entre les voitures intermédiaires 3a et la chaîne de traction 8 des voitures deux niveaux motorisées 4. Une conséquence est que ces câbles ont une masse moins importante que la masse des câbles de puissance des architectures des automotrices de l'art antérieur. La complexité du câblage est également nettement réduite.

### Variantes du premier mode de réalisation

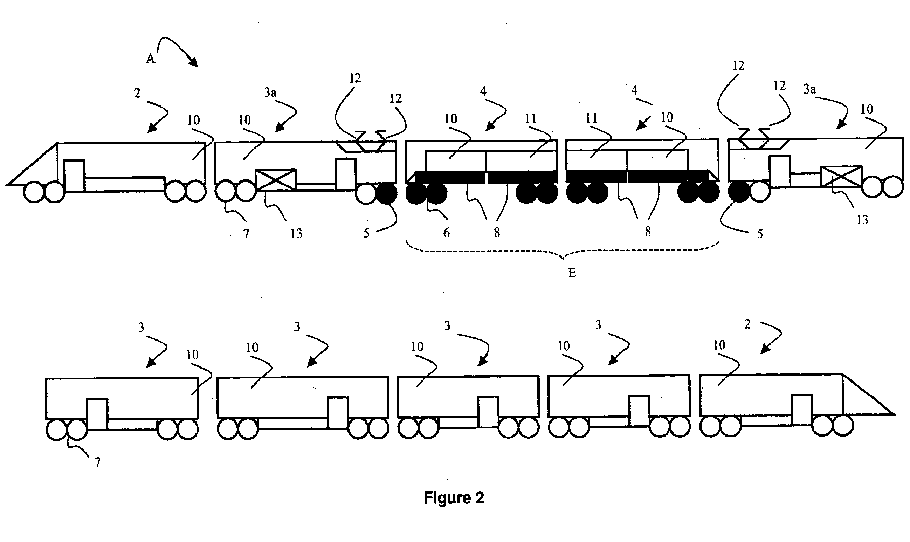

La figure 2 montre l'automotrice A précédente avec le même nombre de voitures mais dans laquelle les voitures intermédiaire 3a et les voitures deux niveaux motorisées 4 sont disposées adjacentes à la première voiture pilote 2. Cette variante n'est pas revendiquée.

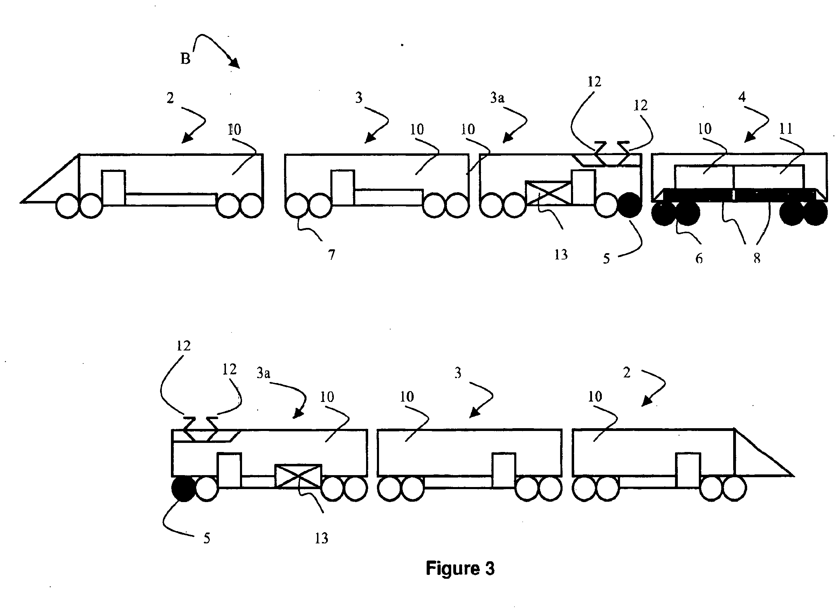

La figure 3 montre une automotrice B avec un nombre restreint de voitures dans laquelle une seule voiture deux niveaux motorisée 4 est disposée entre les voitures intermédiaire 3a.

Il est clair que selon d'autres modes de réalisation, non représentés, les voitures intermédiaire 3a et les voitures deux niveaux motorisées 4 sont disposées adjacentes, telles que décrites dans la présente demande et représentées dans les figures, et sont positionnées de façon quelconque au sein de l'automotrice.

### Deuxième mode de réalisation

Pour une automotrice plus courte que l'automotrice décrite dans le premier mode de réalisation ci-dessus ou roulant à des vitesses moindres et donc comportant un moins grand nombre de chaînes de traction ou des chaînes de traction de masse moins élevée, il est avantageux, soit de diminuer le nombre de bogies moteurs tout en maintenant le nombre de bogie, soit de supprimer certains bogies moteurs.

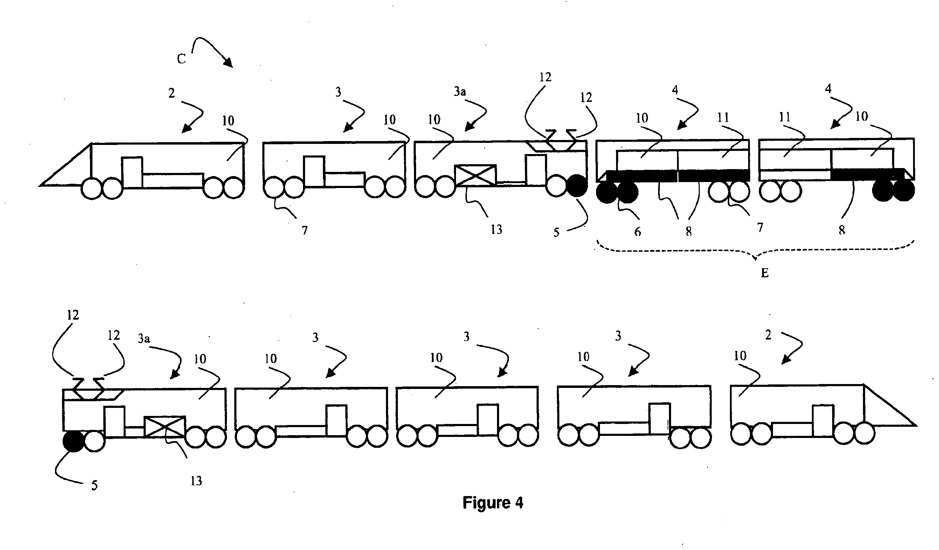

Ainsi, dans le mode de réalisation représenté sur la figure 4, sur laquelle les références aux éléments semblables à ceux de la figure 1 ont été conservées, une automotrice C se distingue de celle des modes de réalisation précédents en ce que les voitures deux niveaux 4 constituant l'ensemble E comportent un moins grand nombre de bogies moteurs. Les voitures deux niveaux 4 sont ici portées chacune par un bogie moteur 6 et un bogie porteur 7 disposés à leurs extrémités. De façon avantageuse, les bogies moteurs sont disposés aux extrémités adjacentes avec les voitures intermédiaires 3a.

Comme le véhicule est non articulé, l'automotrice C de la figure 4 possède vingt bogies, deux bogies motorisés 6, quatorze bogies porteurs 7 et deux bogies partiellement motorisés, pour une longueur d'environ 200 m. Dans ce mode de réalisation, seuls deux bogies des voitures deux niveaux 4 sont motorisés. Une telle automotrice peut transporter de l'ordre de 550 passagers, en fonction de l'aménagement intérieur, à une vitesse commerciale d'au moins 250 km/h.

### Variantes aux différents modes de réalisation

Comme décrit dans le premier mode de réalisation, dans chacun des autres modes de réalisation et des variantes précédents, les voitures intermédiaires 3a sont susceptibles de recevoir des équipements électriques auxiliaires 13.

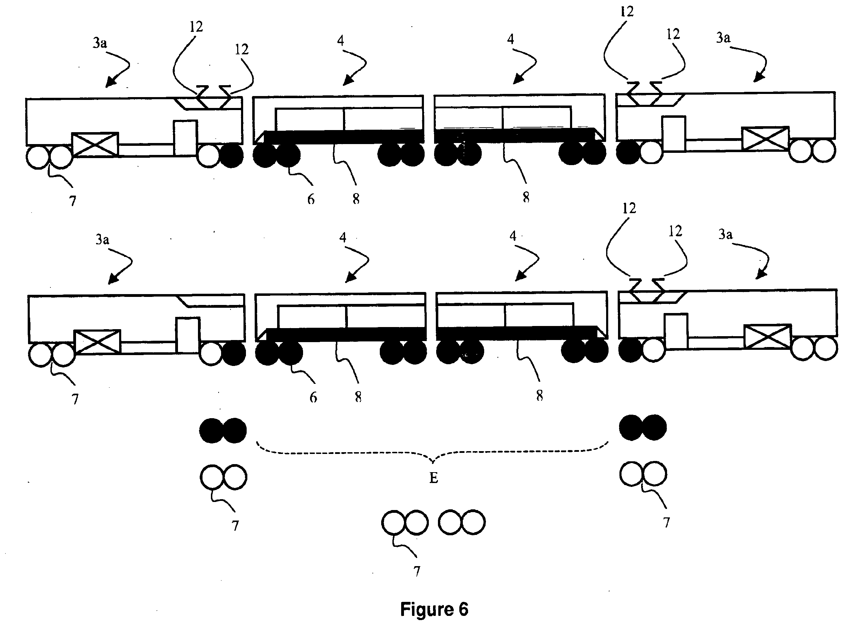

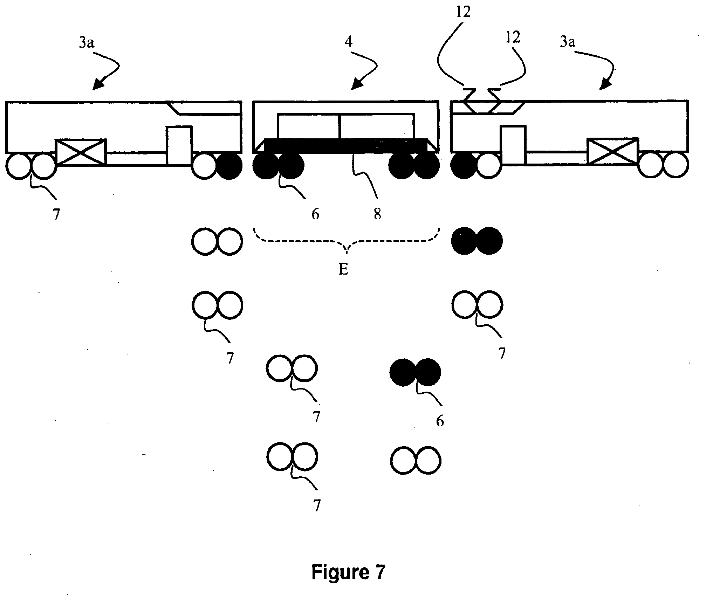

La figure 7 représente sous une forme simplifiée des configurations possibles des bogies moteurs 6 et des bogies porteurs 7 de l'automotrice selon les différents modes de réalisation données à titre d'exemple. Sur les figures 6 et 7, les variantes dans lesquelles au moins l'une des voitures intermédiaires 3a ne comporte pas d'essieu motorisé, ne sont pas revendiqués. Sont seulement représentés et numérotés les voitures intermédiaires 3a, les voitures deux niveaux motorisées 4, les chaînes de traction 8, les bogies moteurs 6, les bogies porteurs 7 et les pantographes 12.

Les figures 6 et 7 représentent les combinaisons possibles entre chaînes de traction 8, bogies moteurs 6, bogies porteurs 7 et pantographes 12 pour chaque mode de réalisation avec des voitures deux niveaux motorisées 4 ayant chacune un bogie dédié à chacune de leurs extrémités.

Ainsi, l'automotrice réalisée selon l'invention est complètement modulable en termes de capacité voyageurs et de vitesse puisqu'elle peut comprendre, par exemple, sept à onze voitures, trois ou quatre chaînes de traction 8, de six à douze essieux moteurs 5 répartis sur trois à six bogies moteurs 6 et peut atteindre une vitesse maximale comprise entre 140 et 350 km/h.

Cette modularité est atteinte par la simplification des types de voitures (pilotes 2, remorques 3 et motorisée 4) tout en appliquant la règle d'alternance des remorques et des voitures recevant une chaîne de traction 8 et la règle d'alternance des bogies moteurs 6 et des bogies porteurs 7 pour respecter la charge maximale à l'essieu.

## Revendications

1. Automotrice de transport de voyageurs, au moins partiellement à deux niveaux et à motorisation concentrée **caractérisée en ce qu'**elle comporte successivement :
- une première voiture pilote (2) non motorisée, puis au moins une voiture intermédiaire (3) non motorisée,
- un ensemble (E) constitué d'au moins une voiture deux niveaux (4) au moins partiellement motorisé, la motorisation de l'automotrice étant concentrée dans cet ensemble (E)
- puis au moins une voiture intermédiaire non motorisée (3) et une seconde voiture pilote (2) non motorisée,
l'automotrice comportant, de part et d'autre des voitures deux niveaux (4), des voitures intermédiaires (3a) immédiatement adjacente aux voitures deux niveaux (4) de l'ensemble (E), chacune de ces voitures intermédiaires immédiatement adjacente (3a) étant en liaison non-articulée à l'une des voitures deux niveaux motorisées (4), chaque voiture intermédiaire immédiatement adjacente (3a) comportant, à son extrémité adjacente à l'une des voitures deux niveaux (4), un bogie dont au moins un essieu est motorisé,
les extrémités adjacentes desdites voitures deux niveaux (4) dudit ensemble (E), desdites voitures pilotes (2) et desdites voitures intermédiaires (3, 3a) étant toutes non-articulées.

2. Automotrice selon la revendication 1, dans laquelle l'ensemble des voitures (2, 3, 3a, 4) sont à deux niveaux.

3. Automotrice selon la revendication 1, dans laquelle les voitures (2, 3, 3a) autres que les voitures deux niveaux (4) sont à un niveau.

## Patentansprüche

1. Triebwagen zur Personenbeförderung, zumindest teilweise doppelstöckig und mit konzentrierter Motorisierung, **dadurch gekennzeichnet, dass** er nacheinander Folgendes umfasst:
- einen ersten nicht motorisierten Steuerwagen (2), dann mindestens einen nicht motorisierten Zwischenwagen (3),
- eine Einheit (E), die aus mindestens einem Doppelstockwagen (4) besteht, der zumindest teilweise motorisiert ist, wobei die Motorisierung des Triebwagens in dieser Einheit (E) konzentriert ist
- dann mindestens einen nicht motorisierten Zwischenwagen (3) und einen zweiten nicht motorisierten Steuerwagen (2),
der Triebwagen umfassend, auf beiden Seiten der Doppelstockwagen (4), Zwischenwagen (3a), die unmittelbar an die Doppelstockwagen (4) der Einheit (E) angrenzen, wobei jeder dieser unmittelbar angrenzende Zwischenwagen (3a) in nicht gelenkiger Verbindung mit einem der motorisierten Doppelstockwagen (4) ist, jeder unmittelbar angrenzende Zwischenwagen (3a) umfassend an seinem an einen der Doppelstockwagen (4) angrenzenden Ende ein Drehgestell, wovon mindestens eine Achse motorisiert ist,
wobei die angrenzenden Enden der Doppelstockwagen (4) der Einheit (E), der Pilotwagen (2) und der Zwischenwagen (3, 3a) alle nicht gelenkig sind.

2. Triebwagen nach Anspruch 1, wobei alle Wagen (2, 3, 3a, 4) doppelstöckig sind.

3. Triebwagen nach Anspruch 1, wobei die Wagen (2, 3, 3a), die keine Doppelstockwagen (4) sind, einstöckig sind.

## Claims

1. Self-propelled passenger transport vehicle, at least partially double-decker and with concentrated motorisation, **characterised in that** it comprises successively:
- a first non-motorised pilot car (2) and then at least one non-motorised intermediate car (3),
- an assembly (E) consisting of at least one at least partially motorised double-decker car (4), the motorisation of the self-propelled vehicle being concentrated in this assembly (E)
- then at least one non-motorised intermediate car (3) and a second non-motorised pilot car (2),
the motor coach comprising, on either side of the double-deck cars (4), intermediate cars (3a) immediately adjacent to the double-decker cars (4) of the assembly (E), each of these immediately adjacent intermediate cars (3a) being in non-articulated connection with one of the motorised double-decker cars (4), each immediately adjacent intermediate car (3a) comprising, at its end adjacent to one of the double-decker cars (4), a bogie of which at least one axle is motorised,
the adjacent ends of said double-decker cars (4) of said assembly (E), said pilot cars (2) and said intermediate cars (3, 3a) being all non-articulated.

2. A self-propelled vehicle according to claim 1, wherein all the cars (2, 3, 3a, 4) are double-decker.

3. A self-propelled vehicle according to claim 1, wherein the cars (2, 3, 3a) other than the double-decker cars (4) are single-decker.
